# EUROPÄISCHE PATENTSCHRIFT

(11) **EP 1 448 420 B1**
(45) Veröffentlichungstag und Bekanntmachung des Hinweises auf die Patenterteilung: **04.01.2006**
(21) Anmeldenummer: 02803022.9
(22) Anmeldetag: 14.11.2002
(51) Int. Cl.: B60T 13/74, F16D 55/224

(54) **STEUERUNGSVERFAHREN ZUR STEUERUNG EINES NACHSTELLSYSTEMS EINER SCHEIBENBREMSE**
CONTROL METHOD FOR CONTROLLING A RESETTING SYSTEM OF A DISK BRAKE
PROCEDE DE COMMANDE POUR REGULER UN SYSTEME DE RATTRAPAGE DE FREIN A DISQUE

(30) Priorität: 16.11.2001 DE 10156503
(43) Veröffentlichungstag der Anmeldung: 25.08.2004
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE)
(74) Vertreter: Mattusch, Gundula
(86) Internationale Anmeldenummer: PCT/EP2002/012741
(87) Internationale Veröffentlichungsnummer: WO 2003/042019

(56) Entgegenhaltungen:
- EP-A- 0 610 797
- WO-A-99/05428
- DE-A- 10 020 504

## Beschreibung

Die Erfindung betrifft ein Steuerungsverfahren zur Steuerung eines Nachstellsystems einer Scheibenbremse mit einem Bremssattel, der eine auf einer Radachse axial verschiebbare Bremsscheibe übergreift, beidseits der Bremsscheibe angeordneten Bremsbelägen, einer Zuspanneinrichtung zum Zuspannen der Scheibenbremse und dem über eine Steuereinrichtung ansteuerbaren elektromotorisch ausgelegten Nachstellsystem, das beidseits der Bremsscheibe jeweils wenigstens eine Nachstelleinrichtung mit einem Elektromotor zum Nachstellen der Bremsbeläge bei Auftritt von Bremsbelagverschleiß aufweist, wobei das Steuerungsverfahren mit einem Programm der Steuereinrichtung ausgeführt wird.

Scheibenbremsen mit einem elektromotorisch betätigten Nachstellsystem sind an sich bekannt, so z.B. aus der DE 197 56 519 A1. Bekannt ist ferner eine mittige Anordnung des Nachstellantriebes zwischen den Dreh- oder Stellspindeln, so aus der DE 37 16 202 A1 oder der WO 99/05428. Aus der DE-A-100 20 504 ist eine Scheibenbremse bekannt, bei der eine Bremsscheibe axial zwischen Auschlägen verschieblich angeordnet ist. Auf dem äußeren Umfang der Radnabe sind Nochen verteilt, zwischen die Abstützelemente am Innenumfang der Bremsscheibe greifen.

In der WO 99/05428 wird auch ein besonders einfaches Ansteuerungsverfahren beschrieben, welches ohne zusätzliche Sensoren ausführbar ist. Dazu wird vorgeschlagen, die Lüftspieleinstellung nach jeder Bremsung oder nach einer vorgegebenen, festen Anzahl von Bremsungen vorzunehmen.

Problematisch ist, daß die bekannten Scheibenbremsen entweder eine aufwendige Sensorik zur Messung des Lüftspieles erfordern oder das ein Verklemmen der Scheibenbremse beim Einleiten einer Bremsung während des Einstellens des Lüftspiels auftreten kann.

Es ist daher eine Aufgabe der Erfindung, ein zuverlässiges Steuerungsverfahren für Nachstellsysteme von Scheibenbremsen der genannten Art zu schaffen, welches es ermöglicht, das Lüftspiel der Bremse ohne den Einsatz spezieller Sensoren einzustellen.

Die Erfindung löst diese Aufgabe durch den Gegenstand des Anspruches 1.

Dabei wird zum Ermitteln des Ist-Lüftspiels der Scheibenbremse die Bremsscheibe mit den Nachstelleinrichtungen beidseits der Bremsscheibe zwischen zwei axialen Anschlägen, welche den Verschiebeweg der Bremsscheibe begrenzen, hin- und hergeschoben. Daraufhin wird der zurückgelegte Ist-Verschiebeweg der Bremsscheibe ermittelt und das Ist-Lüftspiel wird aus dem des Ist-Verschiebeweg, einem vorgespeicherten Verschiebeweg-Eichwert und einem vorgespeicherten Soll-Lüftspiel errechnet und beim Vorliegen einer Abweichung vom Soll-Lüftspiel oder beim Überschreiten eines Grenzwertes auf den Wert des Soll-Lüftspieles eingestellt.

So wird z.B. beim Hin- und Herschieben der Bremsscheibe zunächst der Elektromotor der einen Nachstelleinrichtung zum Verdrehen der Nachstellspindeln in Richtung "Lüftspiel vergrößern" und der Elektromotor der jeweils auf der anderen Seite der Bremsscheibe liegenden Nachstelleinrichtung gleichzeitig zur Verdrehung der Nachstellspindeln in Richtung "Lüftspiel verkleinern" angesteuert und nach Erreichen des Anschlages die Bewegungsrichtung der beiden Nachstelleinrichtungen bis zum Erreichen des zweiten Anschlages umgekehrt. Somit wird die Bremsscheibe durch die beiden Nachstelleinrichtungen beidseits der Bremsscheibe zwischen zwei axialen Anschlägen auf der Nabe, welche den Verschiebeweg begrenzen, hin- und hergeschoben. Der Betrag des Verschiebeweges der Bremsscheibe, der sich als Differenz des Abstandes zwischen den beiden Anschlägen und der Dicke der Bremsscheibe in diesem Bereich ergibt, ist in einem Speicher der Steuerelektronik speicherbar.

Ein Vorteil des Verfahrens ist darin zusehen, daß das Ist-Lüftspiel ohne zusätzliche Sensoren ermittelbar ist.

Ein weiterer besonderer Vorteil ergibt sich daraus, daß kein Verklemmen der Scheibenbremse bei einem Einleiten von Bremsungen während des Meßvorganges des Ist-Lüftspieles erfolgen kann, da die Bremsscheibe jeweils nur von einer Seite der Bremsscheibe aus bewegt wird, so daß auch beim Anliegen der Bremsbeläge an der Bremsscheibe während der Messung noch ein Spiel auf der jeweils gegenüberliegenden Seite des Bremsbelages erhalten bleibt.

Beim Verschieben der Bremsscheibe durch die Verschleißnachstelleinrichtungen beidseits der Bremsscheibe wird z.B. durch eine Decodiereinrichtung der EC-Motoren der tatsächlich benötigte Verschiebeweg ermittelt. Der tatsächlich benötigte Verschiebeweg ist um den Betrag des Lüftspieles größer als die in der Steuerung gespeicherte Abstandsdifferenz, da die Nachstelleinrichtung bei der Umkehr der Bewegungsrichtung zuerst das vorhandene Lüftspiel durchfährt, bevor der bis zu diesem Moment der Bremsscheibe vorlaufende Bremsbelag die Bremsscheibe berührt. Während des Meßvorganges bleibt das vorhandene Lüftspiel stets erhalten, da beide Nachstelleinrichtungen stets um gleiche Beträge im gleichen Richtungssinn bewegt werden.

Vorzugsweise errechnet die Steuereinrichtung aus dem ermittelten Ist-Lüftspiel die Nachstellbewegungen der Bremsbeläge beiderseits der Bremsscheibe und steuert die Nachstelleinrichtungen beidseits der Bremsscheibe zur Durchführung der Nachstellbewegungen zum Ausgleich des Lüftspieles an.

Es ist auf vorteilhafte Weise möglich, aus sensierten Änderungen der Spannungs- und/oder Stromcharakteristik und/oder eines Decodiersignales der Elektromotoren zu ermitteln, daß einer der Anschläge beim Verschieben der Bremsscheibe erreicht wurde.

Zweckmäßig wird der Verschiebeweg-Eichwert aus der Differenz zwischen dem Abstand der beiden Anschläge beidseits der Bremsscheibe und der Dicke der Bremsscheibe bestimmt und in einem Speicher als Referenzwert abgespeichert. So kann auf einfache Weise zur Ermittlung des Verschiebeweg-Eichwertes:
- durch ein Anlegen beider Bremsbeläge an die Bremsscheibe das Lüftspiel auf Null eingestellt, und
- in diesem Zustand durch ein Hin- und Herschieben der Bremsscheibe zwischen den beiden Anschlägen eine Messung des Ist-Verschiebeweges durchgeführt, und
- die dabei ermittelte Abstandsdifferenz ohne Lüftspiel als Referenzwert für nachfolgende Lüftspieleinstellvorgänge abgespeichert werden.

Vorzugsweise wird der Verschiebeweg-Eichwert nach Inbetriebnahme des Fahrzeuges und/oder einem Bremsbelag und/oder Bremsscheibenwechsel ermittelt, zweckmäßig auf einem Prüfstand. Die Abstandsdifferenz zwischen den beiden Endanschlägen und der Dicke der Bremsscheibe im Bereich der Anschläge kann zwar auch in der Steuerelektronik als fester Wert gespeichert sein, zumal die Bremsscheibe im Bereich der Anschläge quasi keinem Verschleiß unterworfen ist. Vorzugsweise wird der Wert jedoch durch das Nachstellsystem selbst bei erstmaliger Inbetriebnahme des Fahrzeuges ermittelt und vorzugsweise während des Betriebes des Fahrzeuges regelmäßig aktualisiert, z.B. nach einem Start oder vor dem Abstellen des Motors. Hierdurch können Bautoleranzen sowie betriebsbedingte Änderungen der Abstandsmaße als Fehlerquelle ausgeschlossen werden.

Da der Lüftspielmeßvorgang nur bei nicht betätigter Bremse möglich ist, kann der Meßvorgang auch nacheinander an den verschiedenen Bremsen des Fahrzeuges durchgeführt werden, wobei es auch möglich ist, während der Messung an jeder Bremse die jeweils anderen Bremsen des Fahrzeuge einzubremsen, z.B. mit einem EBS-System.

Zweckmäßig sind die axialen Anschläge auf der Radnabe angeordnet, um die Gefahr eines Verklemmens für den Fall weiter zu verringern, daß während des Einstellens des Lüftspieles eine erneute Bremsung eingeleitet wird.

Zur Durchführung des Verfahrens wird eine Bremsscheibenanordnung mit einer Bremsscheibe genutzt, die auf einer Radnabe angeordnet ist, wobei am äußeren Umfang der Radnabe Nocken verteilt sind, zwischen die jeweils am inneren Umfang der Bremsscheibe verteilte Abstützelemente greifen, wobei die Bremsscheibe im montierten Zustand auf den Nocken der Nabe zwischen Anschlägen verschiebbar ist.

Vorzugsweise ist in einer axialen Richtung die zwischen den Abstützelementen mit jeweils mit einem inneren Ansatz mit einer Breite A versehene Bremsscheibe jeweils durch einen Bund gesichert, der einen der beiden Anschläge bildet.

Zweckmäßig ist ferner in einer der anderen axialen Richtung die Bremsscheibe durch Sicherungselemente gesichert, welche an/auf den Nocken der Nabe angeordnet sind.

Vorzugsweise ist der Abstand zwischen den Bünden und den Sicherungselementen größer als die Breite A der Bremsscheibe im Auflagebereich auf den Nocken der Nabe, so daß ein Verschiebeweg größer als Null realisiert wird.

Vorteilhafte Ausgestaltungen der Erfindung sind den Unteransprüchen zu entnehmen.

Nachfolgend werden bevorzugte Ausführungsbeispiele anhand der Zeichnung näher beschrieben. Es zeigt:
- Figur 1: ein Flußdiagramm, welches den Ablauf eines Ausführungsbeispiels des erfindungsgemäßen Steuerungsverfahrens veranschaulicht;

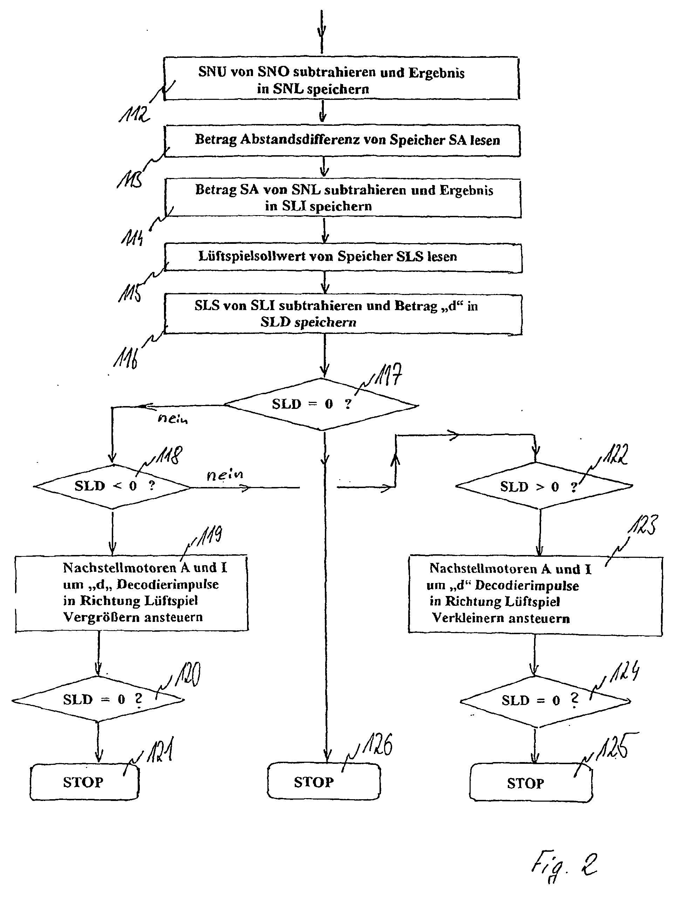

- Figur 2: die Fortsetzung des Flußdiagrammes aus Fig. 1;
- Figur 3: eine Prinzipskizze einer Scheibenbremse, bei der das Verfahren nach Fig. 1 und 2 einsetzbar ist;
- Figur 4: eine teilgeschnittene Draufsicht auf eine Scheibenbremse, bei der das Verfahren nach Fig. 1 und 2 einsetzbar ist;
- Fig. 5a: einen Schnitt durch eine Bremsscheibe auf einer Radnabe;
- Fig. 5b: eine gegenüber Fig. 5a um 90° gedrehte Ansicht eines Teiles der Anordnung aus Fig. 5a;
- Fig. 6: einen Schnitt durch eine Bremsscheibe auf einer Radnabe; und
- Fig. 7: einen vergrößerten Ausschnitt aus Fig. 6.

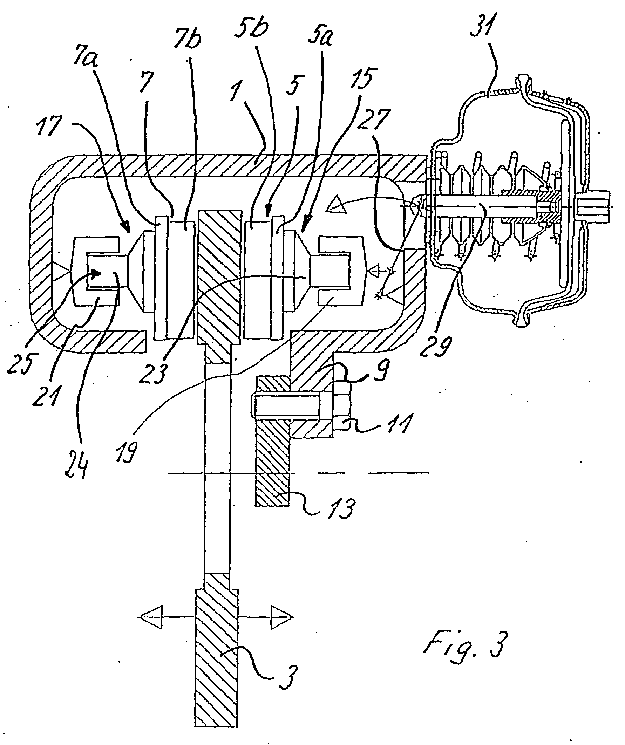

Figur 3 zeigt eine pneumatisch betätigbare Scheibenbremse, die einen Bremssattel 1 aufweist, der eine Bremsscheibe 3 in ihrem oberen Umfangsbereich umfaßt. Denkbar, aber nicht dargestellt ist auch eine insgesamt elektromotorische Betätigung.

Beidseits der Bremsscheibe 3 sind in Richtung der Bremsscheibe und von dieser weg - d.h. senkrecht zur Ebene der Bremsscheibe 3 - verschiebliche Bremsbeläge 5, 7 angeordnet, die in üblicher Weise aus einem Bremsbelagträger 5a, 7a und einem darauf aufgebrachten Belagmaterial 5b, 7b bestehen.

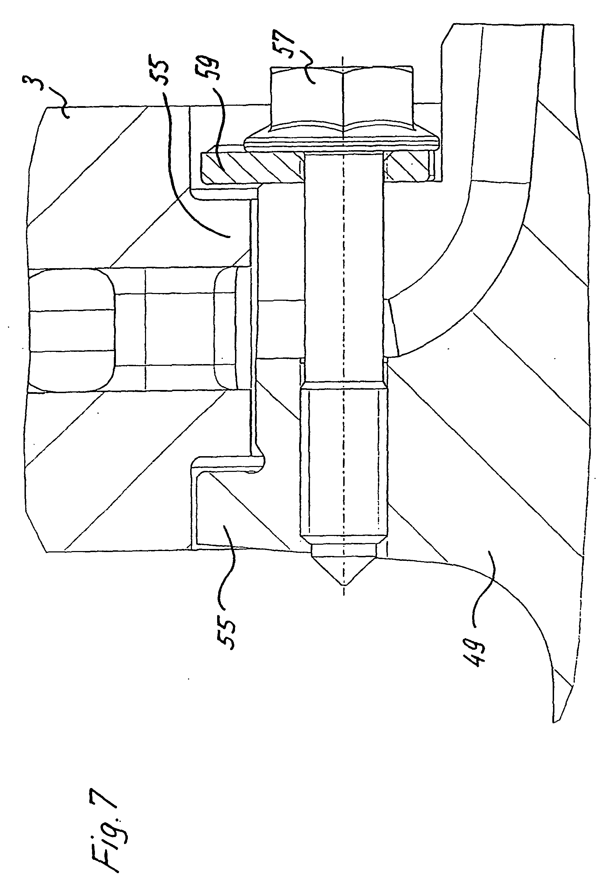

Der Bremssattel 1 ist in Figur 7 im rechten unteren Abschnitt 9, der sich in Richtung der - hier nicht dargestellten - Radachse erstreckt, mittels mindestens eines oder vorzugsweise mehrerer Bolzen 11 beispielhaft an einem Achsflansch 13 der Scheibenbremse befestigt.

Die Bremsscheibe 3 ist als Schiebescheibe ausgebildet, welche um den Betrag des bei Bremsungen zu überwindenden Arbeitshubes relativ zum Bremssattel 1 zwischen zwei

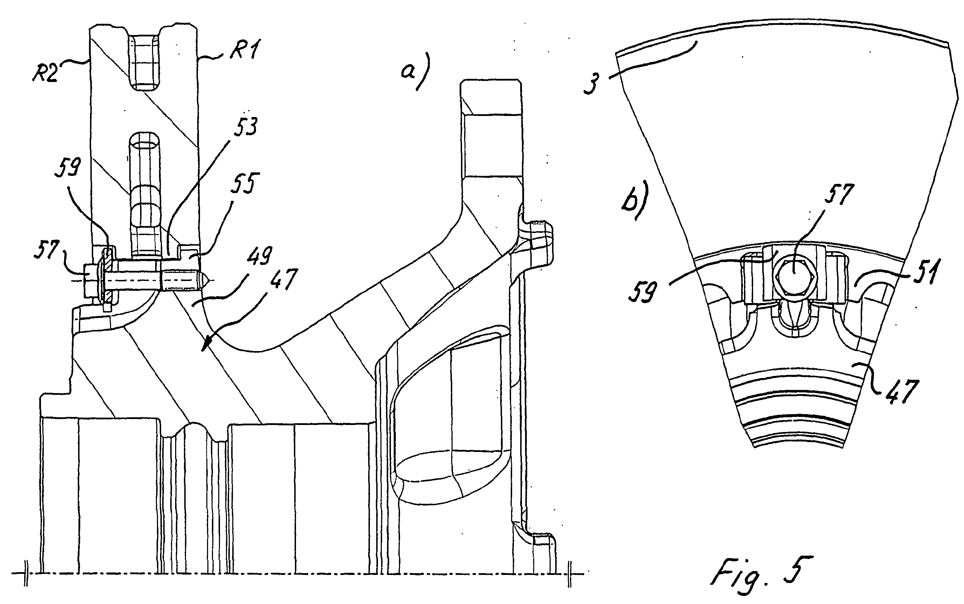

In Fig. 3 nicht dargestellten Anschlägen auf der Radachse verschieblich ist (siehe hierzu Fig. 5 - 7).

Da nach Fig. 3 eine Relativbeweglichkeit zwischen Bremssattel 1 und Bremsscheibe gegeben ist, welche im wesentlichen dem Betrag des Arbeitshubes entspricht, ist ein Nachstellsystem vorgesehen. Dieses umfasst beidseits der Bremsscheibe Nachstelleinrichtungen 15, 17 zum Ausgleich des Lüftspiels bzw. des bei Bremsungen entstehenden Bremsbelagverschleißes.

Die Nachstelleinrichtungen 15, 17 bestehen hier auf jeder Seite der Bremsscheibe beispielhaft aus jeweils wenigstens einer oder mehr, bevorzugt zwei Nachstellhülsen 19, 21, in welchen bolzenartige Ansätze 24 von Druckstücken 23, 25 verdrehbar angeordnet sind, so daß eine relative axiale Beweglichkeit zwischen den Nachstellhülsen 21, 23 sowie den Druckstücken 23, 25 gegeben ist. Selbstverständlich ist auch eine umgekehrte Anordnung denkbar, bei der die Druckstücke einen - hier nicht dargestellten - hülsenartigen Ansatz aufweisen, der auf einem Bolzen verdrehbar ist.

Die in Figur 3 rechts dargestellte Nachstelleinrichtung 15 stützt sich an einem neben der Nachstelleinrichtung 15 zur Zuspanneinrichtung gehörigen Drehhebel 27 ab, welcher in seinem in Figur 13 oberen Bereich von einer Kolbenstange 29 eines Bremszylinders 31 betätigbar ist und der in seinem unteren Teil beispielsweise über (hier nicht dargestellte) Kugelelemente oder eine sonstige Lagerung am Bremssattel gelagert ist, wobei er ferner an seiner vom Bremssattel abgewandten Seite an der Nachstellhülse 19 direkt oder über Zwischenelemente wie Kugeln und/oder weitere Zwischenstücke gelagert ist.

Die auf der dem Drehhebel 27 gegenüberliegenden Seite der Bremsscheibe 1 angeordnete Nachstellhülse 21 ist dagegen direkt am Bremssattelinneren abgestützt.

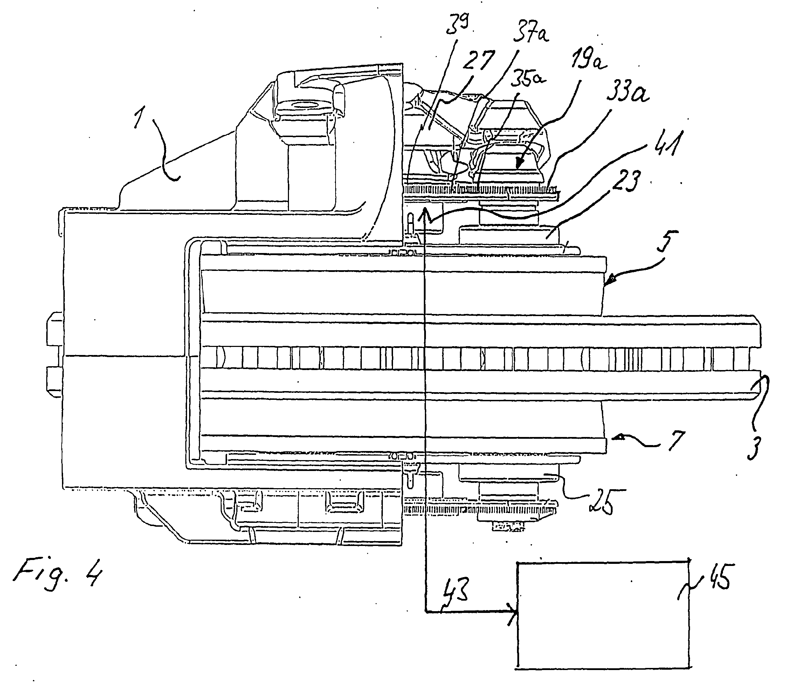

Bei der Bremse der Fig. 7 sind jeweils beidseits der Bremsscheibe zwei der Nachstellhülsen 19, 21 (siehe auch Fig. 4) sowie zwei der Druckstücke 23, 25 angeordnet sind, welche über einen Zahnradmechanismus miteinander synchronisierbar sind.

Dies ist auch besonders gut aus Figur 4 zu erkennen. Die hier dargestellten Nachstellhülsen 19a ist an ihrem äußeren Umfang mit einem Zahnrad 33a oder einem zahnradartigen Ansatz versehen, der mit einem Zahnrad 35a kämmt, welches wiederum von einem Zahnrad 37a angetrieben wird, das seinerseits von einem Abtriebszahnrad 39 eines Elektromotors 41 gedreht wird. Sämtliche Zahnräder 33a, 35a, 37a, 39 liegen in einer Ebene.

Schematisch ist in Fig. 3 noch angedeutet, daß der Elektromotor 41 über eine Daten- und Versorgungsleitung 43 mit einer Steuerungseinrichtung 45 verbunden ist (z.B. eine ABS- und/oder EBS-Steuereinrichtung, welche ihrerseits mit der übrigen Fahrzeugelektronik verbunden sein kann.

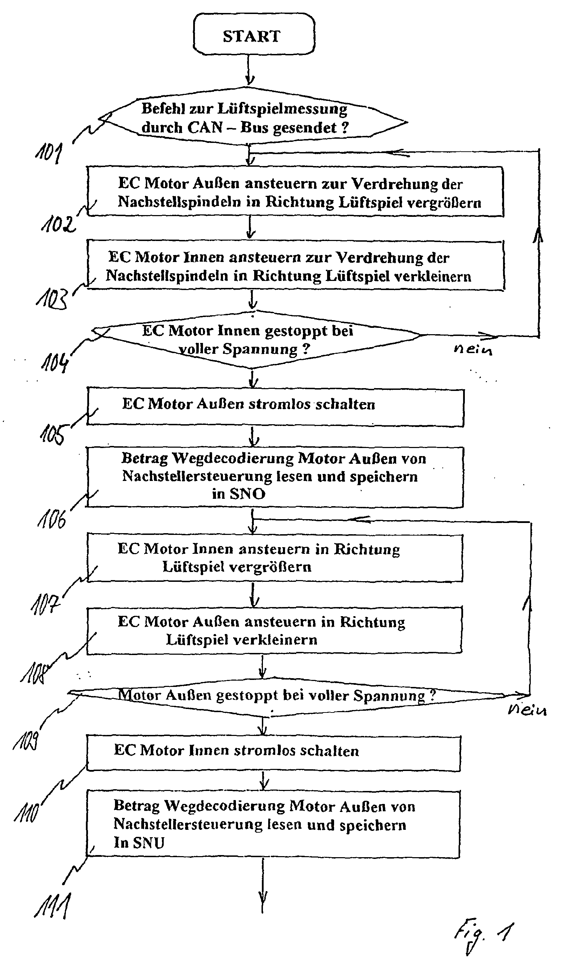

Figur 1 zeigt ein Ansteuerungsverfahren für elektrische Verschleißnachstellsysteme, welches insbesondere für Bremsen nach Art der Figur 3 und 4 geeignet ist.

Figur 1 gibt ein besonders umkompliziertes und einfaches Steuerungsverfahren zur Einstellung des Lüftspieles wieder.

Zunächst wird in einem Schritt 101 überprüft, ob ein Befehl zur Lüftspielmessung anliegt, z.B. als Signal auf einem CAN-Bus. Vorzugsweise ergeht ein derartiger Befehl nach jeder Bremsung, z.B., wenn das Lösen der Bremse beendet ist oder auch nach einer von der Steuerungseinrichtung vorgegebenen Anzahl von Bremsungen.

Darauf hin erfolgt das Hin- und Herschieben der Bremsscheibe.

Dabei wird hier zunächst die Bremsscheibe von "außen" nach "innen" verschoben, d.h., der Elektromotor der äußeren Nachstelleinrichtung wird zur Verdrehung der Nachstellspindeln in Richtung "Lüftspiel vergrößern" angesteuert (Schritt 102) und der Elektromotor der inneren Nachstelleinrichtung wird vorzugsweise gleichzeitig zur Verdrehung der Nachstellspindeln in Richtung "Lüftspiel verkleinern" angesteuert (Schritt 103). Hierdurch wird die Bremsscheibe vom Elektromotor über die Druckstücke in Richtung des inneren Anschlages verschoben.

Sodann wird in einem Schritt 105 überprüft, ob der Anschlag erreicht wurde. Dies kann beispielsweise dadurch erfolgen, daß die Spannungs- und/oder Stromcharakteristik der Elektromotoren (z.B. anhand deren Decodiersignal) beobachtet wird, welche sich ändert, wenn sich der Elektromotor der inneren Nachstelleinrichtung beim Erreichen des Anschlages nicht weiter drehen kann.

Ist dies nicht der Fall, wird erneut Schritt 102 gestartet (Programmschleife). Wurde dagegen der Anschlag erreicht, wird auch der äußere Elektromotor stromlos geschaltet (Schritt 105) und dann der zurückgelegte Weg ermittelt - z.B. über die Information der an die Schrittmotoren des äußeren Elektromotors übermittelten Decodiersignale (Schritt 106) - und in einem Feld SNO gespeichert.

Sodann wird die Bremsscheibe zum Anschlag auf der gegenüberliegenden Seite der Bremsscheibe geschoben.

Dabei wird die Bremsscheibe von "innen" nach "außen" verschoben, d.h., der Elektromotor der inneren Nachstelleinrichtung wird zur Verdrehung der Nachstellspindeln in Richtung "Lüftspiel vergrößern" angesteuert (Schritt 107) und der Elektromotor der äußeren Nachstelleinrichtung wird vorzugsweise gleichzeitig zur Verdrehung der Nachstellspindeln in Richtung "Lüftspiel verkleinern" angesteuert (Schritt 108). Hierdurch wird die Bremsscheibe in Richtung des äußeren Anschlages verschoben.

Sodann wird in einem Schritt 109 überprüft, ob der Anschlag erreicht wurde. Dies kann beispielsweise dadurch erfolgen, daß die Spannungs- und/oder Stromcharakteristik der Elektromotoren beobachtet wird, welche sich ändert, wenn sich der Elektromotor der äußeren Nachstelleinrichtung beim Erreichen des Anschlages nicht weiter drehen kann.

Ist dies nicht der Fall, wird erneut Schritt 107 gestartet (Programmschleife).

Ist dies dagegen der Fall, wird auch der innere Elektromotor stromlos geschaltet (Schritt 110) und dann der zurückgelegte Weg ermittelt - z.B. über die Information der an die Schrittmotoren des äußeren Elektromotors übermittelten Decodiersignale (Schritt 111). Dieser Wert wird in einem Feld SNU gespeichert.

Sodann wird der Wert "SNU" vom Wert "SNO" subtrahiert und das Ergebnis in einem Feld SNL gespeichert (Schritt 112). Der Wert des Feldes SNL entspricht dem zurückgelegten Verschiebeweg.

Daraufhin wird die vorgespeicherte Abstandsdifferenz zwischen den Anschlägen - der Verschiebeweg-Eichwert - aus einem Speicherfeld SA ausgelesen (Schritt (113). Sodann wird vom Wert "SNI" der Wert SA zwischen den Anschlägen abgezogen und als Ist-Lüftspielinformation in einem Feld SLI gespeichert (Schritt 114).

Danach wird das vorgespeicherte Soll-Lüftspiel aus einem Speicherfeld SLS ausgelesen Schritt (115) und es wird von dem Verschiebeweg das Ist-Lüftspiel SLI subtrahiert und die aufgetretene Lüftspielabweichung als Nachstellweg in einem Feld SLD gespeichert (Schritt 116)

Sodann wird die Bremsscheibe ggf. noch in eine Sollposition verfahren, falls sie sich noch nicht in dieser befindet - z.B. am inneren Anschlag - und dann das Lüftspiel eingestellt.

Dabei gibt es drei Optionen.

Wird ermittelt, das SLD = 0 ist (Schritt 117), so ist die durchzuführende Nachstellbewegung ebenfalls gleich Null, d.h., das Soll-Lüftspiel ist bereits eingestellt und es ist keine Nachstellbewegung erforderlich. Das Programm wird gestoppt (Schritt 126).

Ist SLD dagegen kleiner als Null (Schritt 118), werden die Nachstellmotoren A und I jeweils um "d" Decodierimpulse angesteuert, um das Lüftspiel zu vergrößern (Schritt 120). Wurden die "d" Decodierimpulse zurückgelegt, ist SLD gleich Null (Schritt 120), d.h., die Nachstellung des Lüftspieles ist beendet. Wurden die "d" Decodierimpulse erreicht bzw. zurückgelegt, ist nunmehr SLD gleich Null (Schritt 124), d.h., die Nachstellung des Lüftspieles ist beendet. Das Programm wird gestoppt (Schritt 121).

Ist SLD dagegen größer als Null (Schritt 122), werden die Nachstellmotoren A und I jeweils um "d" Decodierimpulse angesteuert, um das Lüftspiel zu vergrößern (Schritt 123. Wurden die "d" Decodierimpulse zurückgelegt, ist SLD gleich Null (Schritt 124), d.h., die Nachstellung des Lüftspieles ist beendet. Das Programm wird gestoppt (Schritt 125).

Eine besonders vorteilhafte Bremsscheibenanordnung an der Radnabe zeigen Fig. 5 bis 7.

Am äußeren Umfang der Radnabe 47 sind Nocken 49 verteilt, zwischen die jeweils am inneren Umfang der Bremsscheibe 3 verteilte Abstützelemente 51 greifen.

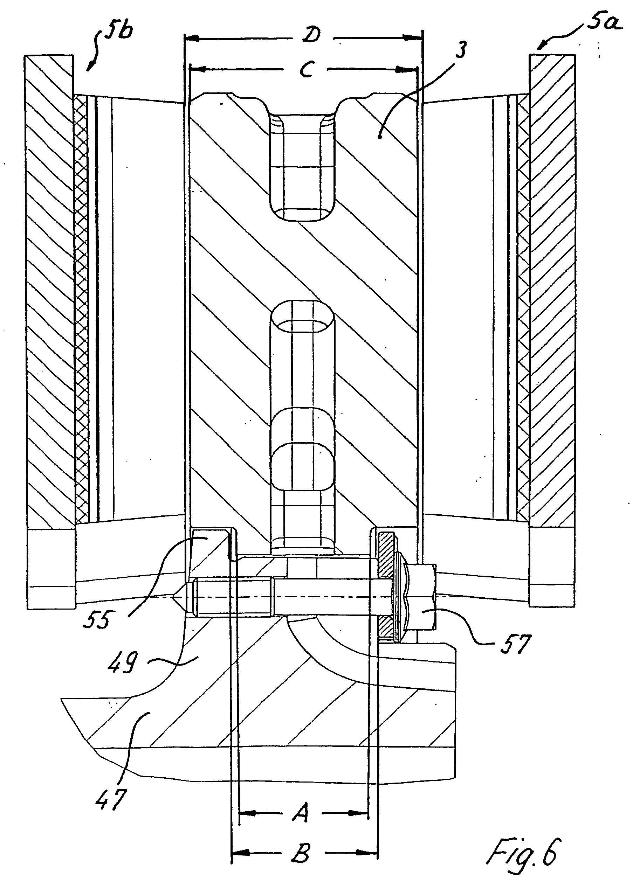

In einer der beiden axialen Richtungen (in Fig. 5 nach rechts) wird die zwischen den Abstützelementen 51 mit jeweils mit einem inneren Ansatz 53 mit einer Breite A (siehe Fig. 6) versehene Bremsscheibe 3 auf vorzugsweise jedem Nocken 49 jeweils durch einen Bund 55 gesichert. Vorzugsweise ist jeweils einer der Bünde 55 am Außenumfang jedes Nockens 49 ausgebildet (hier: angeformt). Die Breite A der Ansätze 53 ist geringer ist als die Bremscheibendicke C (siehe Fig. 6) im Bereich der Reibflächen R1 und R2.

In der entgegengesetzten axialen Richtung erfolgt die Sicherung jeweils durch an den Nocken 55 jeweils mit einer Schraube 57 befestigte Sicherungselemente 59, welches als U- oder L-förmiges Elemente ausgebildet sein können, deren Grundschenkel die axiale Sicherung realisieren und deren Längsschenkel zwischen die Nocken 49 und die Abstützelemente 51 greifen.

Wesentlich ist, daß der Abstand B zwischen den Bünden 55 und den Sicherungselementen 59 größer ist als die Breite A des Bremsscheibenansatzes 53, so daß die Bremsscheibe 3 axial auf der Nabe 47 bzw. hier auf den Nocken 55 der Nabe 47 um einen Weg B - A > 0 verschiebbar ist. Damit stellen die Bünde 55 und die Sicherungselemente 59 hier auf einfache Weise die beiden Anschläge zur Begrenzung des Verschiebeweges der Bremsscheibe dar. Bevorzugt soll der Weg "B - A" der Größe des Arbeitshubes der Scheibenbremse entsprechen.

Mit C wird in Fig. 6 die Bremsscheibendicke und mit D der Abstand zwischen den Bremsbelagreibflächen der Bremsbeläge 5a und 5b bezeichnet, so daß die Differenz D - C das Lüftspiel angibt.

### Bezugszeichenliste

- Bremssattel: 1
- Bremsscheibe: 3
- Bremsbelag: 5
- Bremsbelagträger: 5a/5b
- Bremsbelag: 7
- Bremsbelagträger: 7a/7b
- Abschnitt: 9
- Bolzen: 11
- Achsflansch: 13
- Nachstelleinrichtung: 15
- Nachstelleinrichtung: 17
- Nachstellhülse: 19
- Nachstellhülse: 19
- Nachstellhülse: 21
- Druckstück: 23
- Druckstück: 23
- Ansatz: 24
- Druckstück: 25
- Druckstück: 25
- Drehhebel: 27
- Kolbenstange: 29
- Zahnrad/Ansatz: 33
- Zahnrad: 35
- Zahnrad: 37
- Zahnrad: 39
- Elektromotor: 41
- Daten- und Versorgungsleitung: 43
- Steuerungseinrichtung: 45
- Radnabe: 47
- Nocken: 49
- Abstützelemente: 51
- Ansatz: 53
- Bund: 55
- Schraube: 57
- Sicherungselemente: 59
- Programmschritte: 101 - 103
- Reibflächen: R1, R2

## Patentansprüche

1. Steuerungsverfahren zur Steuerung eines Nachstellsystems einer Scheibenbremse mit einem Bremssattel (1), der eine auf einer Radachse axial verschiebbare Bremsscheibe (3) übergreift, beidseits der Bremsscheibe angeordneten Bremsbelägen (7), einer Zuspanneinrichtung zum Zuspannen der Scheibenbremse und dem über eine Steuereinrichtung (45) ansteuerbaren elektromotorisch ausgelegten Nachstellsystem, das beidseits der Bremsscheibe (3) jeweils wenigstens eine Nachstelleinrichtung (15, 17) mit einem Elektromotor (41) zum Nachstellen der Bremsbeläge (7) bei Auftritt von Bremsbelagverschleiß aufweist, wobei das Steuerungsverfahren mit einem Programm der Steuereinrichtung ausgeführt wird und folgende Schritte aufweist:
- zum Ermitteln des Ist-Lüftspiels der Scheibenbremse wird die Bremsscheibe (3) mit den Nachstelleinrichtungen (15, 17) beidseits der Bremsscheibe (3) zwischen zwei axialen Anschlägen, welche den Verschiebeweg der Bremsscheibe begrenzen, hin- und hergeschoben und es wird der dabei zurückgelegte Ist-Verschiebeweg ermittelt,
- das Ist-Lüftspiel wird aus dem Ist-Verschiebeweg, einem vorgespeicherten Verschiebeweg-Eichwert und einem Soll-Lüftspiel errechnet, und
- und beim Vorliegen einer Abweichung vom Soll-Lüftspiel oder beim Überschreiten eines Grenzwertes eingestellt.

2. Steuerungsverfahren nach Anspruch 1 oder 2, **dadurch gekennzeichnet, daß** die Steuereinrichtung:
- aus dem ermittelten Ist-Lüftspiel die Nachstellbewegungen der Bremsbeläge beiderseits der Bremsscheibe errechnet, und
- die Nachstelleinrichtungen beidseits der Bremsscheibe zur Durchführung der Nachstellbewegungen zum Ausgleich des Lüftspieles ansteuert.

3. Steuerungsverfahren nach einem der vorstehenden Ansprüche, **dadurch gekennzeichnet, daß**
- beim Hin- und Herschieben der Bremsscheibe zunächst der Elektromotor der einen Nachstelleinrichtung zum Verdrehen der Nachstellspindeln in Richtung "Lüftspiel vergrößern" angesteuert und der Elektromotor der jeweils auf der anderen Seite der Bremsscheibe liegenden Nachstelleinrichtung gleichzeitig zur Verdrehung der Nachstellspindeln in Richtung "Lüftspiel verkleinern" angesteuert, und
- nach Erreichen des Anschlages die Bewegungsrichtung der beiden Nachstelleinrichtungen bis zum Erreichen des zweiten Anschlages umgekehrt wird.

4. Steuerungsverfahren nach einem der vorstehenden Ansprüche, **dadurch gekennzeichnet, daß** während des Hin- und Herschiebens der Bremsscheibe beide Nachstelleinrichtungen stets um gleiche Beträge im gleichen Richtungssinn bewegt werden.

5. Steuerungsverfahren nach einem der vorstehenden Ansprüche, **dadurch gekennzeichnet, daß** anhand sensierter Änderungen der Spannungs- und/oder Stromcharakteristik und/oder des Decodiersignales der Elektromotoren ermittelt wird, daß einer der Anschläge beim Verschieben der Bremsscheibe erreicht wurde.

6. Steuerungsverfahren nach einem der vorstehenden Ansprüche, **dadurch gekennzeichnet, daß** der Ist-Verschiebeweg mit Hilfe einer Decodiervorrichtung von EC-Motoren ermittelt wird.

7. Steuerungsverfahren nach einem der vorstehenden Ansprüche, **dadurch gekennzeichnet, daß** der Verschiebeweg-Eichwert aus der Differenz zwischen dem Abstand der beiden Anschläge beidseits der Bremsscheibe und der Dicke der Bremsscheibe bestimmt und in einem Speicher als Referenzwert abgespeichert wird.

8. Steuerungsverfahren nach einem der vorstehenden Ansprüche, **dadurch gekennzeichnet, daß** zur Ermittlung des Verschiebeweg-Eichwertes:
- durch ein Anlegen beider Bremsbeläge an die Bremsscheibe das Lüftspiel auf Null eingestellt,
- in diesem Zustand durch ein Hin- und Herschieben der Bremsscheibe zwischen den beiden Anschlägen eine Messung des Verschiebeweges durchgeführt, und
- die dabei ermittelte Abstandsdifferenz ohne Lüftspiel als Referenzwert für nachfolgende Lüftspieleinstellvorgänge abgespeichert wird.

9. Steuerungsverfahren nach einem der vorstehenden Ansprüche, **dadurch gekennzeichnet, daß** der Verschiebeweg-Eichwert nach Inbetriebnahme des Fahrzeuges und/oder einem Bremsbelag und/oder Bremsscheibenwechsel ermittelt wird.

10. Steuerungsverfahren nach einem der vorstehenden Ansprüche, **dadurch gekennzeichnet, daß** der Verschiebeweg-Eichwert auf einem Prüfstand ermittelt wird.

11. Steuerungsverfahren nach einem der vorstehenden Ansprüche, **dadurch gekennzeichnet, daß** der Verschiebeweg-Eichwert nach einem Start oder vor einem Abstellen des Fahrzeuges ermittelt wird.

12. Steuerungsverfahren nach einem der vorstehenden Ansprüche, **dadurch gekennzeichnet, daß** der Verschiebeweg-Eichwert nacheinander an den verschiedenen Bremsen des Fahrzeuges ermittelt wird, wobei während der Messung an jeder Bremse die jeweils anderen Bremsen des Fahrzeuge eingebremst werden.

13. Steuerungsverfahren nach einem der vorstehenden Ansprüche, **dadurch gekennzeichnet, daß** die axialen Anschläge an der Radnabe angeordnet werden.

## Claims

1. A control process for controlling an adjusting system on a disc brake having a brake calliper (1) which clips over a brake disc (3) and can be moved axially along a wheel axle, brake pads (7) positioned on either side of the brake disc, an application device for applying the brake disc and the electronically driven adjusting system which can be actuated by means of a control device (45) which has at least one adjusting device (15, 17) with an electric motor (41) on either side of the brake disc (3) for adjusting the brake pads (7) as brake pad wear occurs, the control process being carried out by a program in the control device and comprising the following steps:
- in order to determine the actual clearance of the disc brake, the brake disc (3) is pushed back and forth between two axial stops which limit the path of travel of the brake disc by the adjusting devices (15, 17) on either side of the brake disc (3) and during this process the actual path of travel covered is determined,
- the actual clearance is calculated from the actual path of travel, a prestored calibration value for the path of travel and a reference clearance, and
- if there is a deviation from the reference clearance or a limit value is exceeded an adjustment is carried out.

2. A control process in accordance with claim 1 or 2,
**characterised in that**
the control device:
- calculates the adjusting movements for the brake pads on either side of the brake disc using the actual clearance determined, and
- triggers the adjusting devices on either side of the brake disc to carry out the adjusting movements in order to balance out the clearance.

3. A control process in accordance with one of the preceding claims,
**characterised in that**
- as the brake disc is pushed back and forth, the electric motor on one of the adjusting devices is actuated to turn the adjusting spindles in the "increase clearance" direction and the electric motor on the adjusting device on the other side of the brake disc is simultaneous actuated to turn the adjusting spindles in the "reduce clearance" direction, and
- once the stop has been reached, the direction of movement of the two adjusting devices is reversed until they reach the second stop.

4. A control process in accordance with one of the preceding claims,
**characterised in that**
as the brake disc is pushed back and forth, the two adjusting devices are always moved by the same amount in the same direction.

5. A control process in accordance with one of the preceding claims,
**characterised in that**
sensed changes in the voltage and/or current characteristics and/or the decoder signals of the electric motors are used to ascertain when the brake disc has been pushed far enough to reach one of the stops.

6. A control process in accordance with one of the preceding claims,
**characterised in that**
the actual path of travel is determined using a decoder device in EC motors.

7. A control process in accordance with one of the preceding claims,
**characterised in that**
the path of travel calibration value is determined from the difference between the distance between the stops on either side of the brake disc and the thickness of the brake disc, and stored in a memory as a reference value.

8. A control process in accordance with one of the preceding claims,
**characterised in that**
in order to determine the path of travel calibration value:
- the clearance is set to zero by placing both brake pads against the brake disc,
- in this position the path of travel is measured by pushing the brake disc back and forth between the two stops, and
- the differential distance without clearance thus measured is stored as the reference value for subsequent clearance adjustment procedures.

9. A control process in accordance with one of the preceding claims,
**characterised in that**
the path of travel calibration value is determined once the vehicle has been commissioned and/or after each brake pad and/or brake disc change.

10. A control process in accordance with one of the preceding claims,
**characterised in that**
the path of travel calibration value is determined on a test stand.

11. A control process in accordance with one of the preceding claims,
**characterised in that**
the path of travel calibration value is determined before the vehicle is started or after it has been stopped.

12. A control process in accordance with one of the preceding claims,
**characterised in that**
the path of travel calibration value is determined successively for one brake on the vehicle after another, the other brakes on the vehicle being applied while a particular brake is being measured.

13. A control process in accordance with one of the preceding claims,
**characterised in that**
the axial stops are positioned at the wheel hub.

## Revendications

1. Procédé de commande pour la commande d'un système de réglage d'un frein à disque, comprenant un étrier (1), qui saisit un disque de freinage (3) déplaçable axialement sur un essieu, des garnitures de frein (7) disposées des deux côtés du disque de freinage, un dispositif de serrage pour serrer le frein à disque et le système de réglage qui est conçu commandable par moteur électrique par l'intermédiaire d'un dispositif de commande (45) et qui comporte des deux côtés du disque de freinage (3) respectivement au moins un dispositif de réglage (15, 17) ayant un moteur électrique (41) pour régler les garnitures de frein (7) lorsqu'une usure de garniture apparaît, le procédé de commande étant réalisé avec un programme du dispositif de commande et comportant les étapes suivantes :
- pour déterminer le jeu réel du frein à disque, on déplace en va-et-vient le disque de freinage (3) avec les dispositifs de réglage (15, 17) des deux côtés du disque de freinage (3) entre deux butées axiales, qui limitent la course du disque de freinage, et on détermine la course réelle ainsi parcourue,
- on calcule le jeu réel à partir de la course réelle, d'une valeur étalon de course préalablement mémorisée et d'un jeu de consigne, et
- en présence d'un écart par rapport au jeu de consigne ou lors d'un dépassement d'une valeur limite, on effectue un réglage.

2. Procédé de commande selon la revendication 1,
**caractérisé par le fait que** le dispositif de commande :
- calcule à partir du jeu réel déterminé les mouvements de réglage des garnitures de frein des deux côtés du disque de freinage, et
- commande les dispositifs de réglage des deux côtés du disque de freinage pour la mise en oeuvre des mouvements de réglage afin de compenser le jeu.

3. Procédé selon l'une des revendications précédentes, **caractérisé par le fait que**,
- lors du déplacement en va-et-vient du disque de freinage, on commande d'abord le moteur électrique d'un premier dispositif de réglage pour faire tourner les broches de réglage dans le sens d'une "augmentation du jeu" et on commande en même temps le moteur électrique du dispositif de réglage situé respectivement de l'autre côté du disque de freinage pour faire tourner les broches de réglage dans le sens d'une "diminution du jeu", et
- lorsque la butée est atteinte, on inverse le sens de mouvement des deux dispositifs de réglage jusqu'à atteindre la deuxième butée.

4. Procédé de commande selon l'une des revendications précédentes, **caractérisé par le fait que**, pendant le déplacement en va-et-vient du disque de freinage, on déplace les deux dispositifs de réglage toujours des mêmes valeurs dans le même sens.

5. Procédé de commande selon l'une des revendications précédentes, **caractérisé par le fait que**, à l'aide de modifications détectées de la caractéristique de tension et/ou de courant et/ou du signal de décodage des moteurs électriques, on détermine si l'une des butées a été atteinte lors du déplacement du disque de freinage.

6. Procédé de commande selon l'une des revendications précédentes, **caractérisé par le fait qu'**on détermine la course réelle à l'aide d'un dispositif de décodage de moteurs à commutation électronique dits moteurs EC.

7. Procédé de commande selon l'une des revendications précédentes, **caractérisé par le fait qu'**on détermine la valeur étalon de course à partir de la différence entre la distance entre les deux butées des deux côtés du disque de freinage et l'épaisseur du disque de freinage et on la mémorise dans une mémoire comme valeur de référence.

8. Procédé de commande selon l'une des revendications précédentes, **caractérisé par le fait que**, pour déterminer la valeur étalon de course :
- en plaçant les deux garnitures de frein contre le disque de freinage, on règle le jeu à zéro,
- dans cet état, on effectue une mesure de la course en déplaçant en va-et-vient le disque de freinage entre les deux butées, et
- on mémorise la différence de distance ainsi déterminée sans jeu comme valeur de référence pour les opérations suivantes de réglage de jeu.

9. Procédé de commande selon l'une des revendications précédentes, **caractérisé par le fait qu'**on détermine la valeur étalon de course après la mise en service du véhicule et/ou après le remplacement d'une garniture de frein et/ou d'un disque de freinage.

10. Procédé de commande selon l'une des revendications précédentes, **caractérisé par le fait qu'**on détermine la valeur étalon de course sur un banc d'essai.

11. Procédé de commande selon l'une des revendications précédentes, **caractérisé par le fait qu'**on détermine la valeur étalon de course après un démarrage ou avant un arrêt du véhicule.

12. Procédé de commande selon l'une des revendications précédentes, **caractérisé par le fait qu'**on détermine la valeur étalon de course successivement sur les différents freins du véhicule, les autres freins respectifs du véhicule étant serrés pendant la mesure sur chaque frein.

13. Procédé de commande selon l'une des revendications précédentes, **caractérisé par le fait que** les butées axiales sont disposées sur le moyeu de roue.
